# EUROPEAN PATENT SPECIFICATION

(11) **EP 2 787 665 B1**
(45) Date of publication and mention of the grant of the patent: **12.09.2018**
(21) Application number: 13162573.3
(22) Date of filing: 05.04.2013
(51) Int. Cl.: H04J 3/06

(54) **Method for distributing a frequency reference to network clocks of a mobile network having a broken synchronization distribution**
Verfahren zur Verteilung einer Frequenzreferenz an Netzwerktakte eines mobilen Netzwerks mit einer defekten Synchronisationsverteilung
Procédé de distribution d'une référence de fréquence à des horloges de réseau d'un réseau mobile ayant une distribution de synchronisation défectueuse

(43) Date of publication of application: 08.10.2014
(73) Proprietor: Alcatel Lucent, 91620 Nozay (FR)
(72) Inventor: Bui, Dinh Thai, 91620 Nozay (FR); Le Pallec, Michel, 91620 Nozay (FR)
(74) Representative: Berthier, Karine

(56) References cited:
- SÉBASTIEN JOBERT ET AL: "Discussion on the BMCA requirements for the phase/time PTP telecom profile;WD47R1", ITU-T DRAFT ; STUDY PERIOD 2009-2012, INTERNATIONAL TELECOMMUNICATION UNION, GENEVA ; CH, vol. 13/13, 23 May 2012 (2012-05-23), pages 1-6, XP017573678, [retrieved on 2012-05-23]
- STEFANO RUFFINI: "Time and Phase Sync with frequency assistance (G.8271)", ITU-T DRAFT ; STUDY PERIOD 2009-2012, INTERNATIONAL TELECOMMUNICATION UNION, GENEVA ; CH, vol. 13, 6 October 2010 (2010-10-06), pages 1-5, XP017448522, [retrieved on 2010-10-06]

## Description

### Technical field

The present invention relates to mobile networks and more precisely to the distribution of a frequency reference to network clocks of such mobile networks when a synchronization failure occurs in the physical synchronization chain.

Within a physical-layer-based frequency distribution topology, each network node generally comprises at least a network clock. In the following description the term "network clock" refers, in such a case, indifferently to a network clock as well as to the associated network node. The term "master" or "Grand Master" refers to a network clock which frequency is distributed to other network clocks via a packet-based protocol. These other network clocks are called in this case "slaves".

In this technical field, it is known from the state of the art the following documents: "SEBASTIEN JOBERTET AL: Discussion on the BMCA requirements for the phase/time PTP telecom profile; WD47R1"; and "STEFANO RUFFINI : Time and Phase Sync with frequency assistance (G.8271)"

### Background of the invention

The distribution of a frequency reference of a Primary Reference Clock (i.e. ITU-T G.811 a.k.a. PRC/PRS) across a mobile network using a physical-layer-based mechanism, such as SDH/SONET or SyncE (or "Synchronous Ethernet"), has proven to be very robust and accurate across large networks (i.e. compliant with the 50 ppm required by major wireless technologies).

However, this distribution has some important inconvenient. Indeed, it is a link-by-link mechanism (the frequency reference (or clock) is recovered at each network clock by a synchronization card), and as a consequence when a synchronization failure occurs on an intermediate non-redundant synchronization card of the physical synchronization chain, the distribution of synchronization is broken towards the downstream network segment(s) next to the failed intermediate network clock (or node), even though the data path is generally still available. In the case where network nodes of the downstream
network segment(s) are wireless Base Stations (or BTSs), call drops and handover failures will occur massively.

It is recalled that a SyncE equipment has at least a synchronization card comprising an Ethernet Equipment Clock (or EEC) and used to recover the network frequency reference, and at least one Ethernet interface card physically separated from the synchronization card, comprising an oscillator and used to recover data traffic (e.g. to detect frame start). The characteristics of the EEC is specified by the ITU-T G.8262/Y.1362, while the oscillator implemented on the Ethernet interface card is specified by the IEEE 802.3. For instance, the EEC free-run frequency accuracy is ± 4.6 ppm, while the oscillator free-run frequency accuracy is ± 100 ppm.

In order to avoid an interruption of the frequency distribution chain within a SyncE/SDH/SONET network due to the failure of a synchronization card, a redundant second synchronization card can be used within the same network node. The ITU-T SyncE/SDH/SONET recommendations also foresee a reconfiguration scheme when such a synchronization failure occurs. To this effect, backup frequency distribution path(s) may be implemented in order to work around the failed network clock when the synchronization topology allows for such an operation.

However, all of the aforementioned workarounds induce an important additional cost due to additional hardware to be deployed.

Moreover, within the specific context of mobile networks, the aforementioned backup frequency distribution path is even neither possible nor taken into consideration, especially in the access part of the mobile backhaul network, due to the capillarity nature of the topology (i.e. when there is only one possible path). This is, for instance, the case when Base Stations (or BTSs) are chained (data traffic and synchronization signal targeting BTS number N should go through the BTS number N-1 within the chain and so on). It is also noted here that Base Stations often do not implement redundant synchronization cards in order to optimize their costs.

Another possible workaround to the aforementioned single-synchronization-card-failure case is to backup SyncE/SDH/SONET by deploying in parallel PTP between the frequency source (e.g. a Primary Reference Clock (or PRC)), which also plays the role of a PTP Grand Master, and each of the end application clocks. The ITU-T first PTPV2 Telecom frequency profile, for instance, has been specified for such purpose. However, there is, in this case, no interworking between any SyncE/SDH/SONET error detection mechanism and PTP protocol, because SyncE/SDH/SONET and PTP work independently. In the case where the ITU-T first 1588v2 Telecom frequency profile is implemented, a unicast PTP stream is permanently transmitted from the PRC or the frequency source (which also implements, in this case, a PTP Grand Master) towards each of the slave network nodes, even when SyncE/SDH/SONET synchronization distribution topology works perfectly. This represents a waste of network bandwidth, especially in the network segment which is the nearest to the frequency source (because of the aggregation of unicast PTP flows). This also induces an important Packet Delay Variation (or PDV), due to the end-to-end profile, when considering a large mobile network, which could strongly degrade the backup distribution path performance based on PTP (and depending on the slave node local oscillator characteristics).

### Summary of the invention

The invention aims notably at allowing a frequency reference to be distributed to network clocks belonging to downstream network segment(s) of a mobile network, next to an intermediate network clock having a synchronization failure on its synchronization card within a physical-based synchronization distribution topology.

To this effect the invention notably provides with a method intended for transmitting a frequency reference from a frequency source to network clocks, comprising a synchronization card for recovering network synchronization and an interface card for recovering data traffic, and belonging to a mobile network having a physical-layer-based protocol (as primary method) for distributing this frequency reference to the network clocks according to a chosen synchronization distribution topology, and a packet-based protocol (as backup method) for distributing the same frequency reference to the network clocks respecting the chosen synchronization distribution topology.

This method comprises:
- a step (i) of detecting a synchronization failure within a synchronization card of a failed network clock connected to its neighbour network clocks,
- a step (ii) of activating a mechanism of the packet-based protocol between a chosen one amongst neighbour network clocks (of the failed network clock), called the master and with a recovered frequency traceable back to the frequency source, and other neighbour network clocks, called slaves, and
- a step (iii) of using this activated packet-based protocol mechanism to transmit the frequency reference recovered by the master to the slaves, by following the chosen synchronization distribution topology.

The method according to the invention may include additional characteristics considered separately or combined, and notably:
- step (i) may comprise detecting locally the synchronization failure within the failed network clock, and in step (ii) the failed network clock may transmit at least one dedicated management message of the packet-based protocol to each of its neighbour network clocks, in order to inform them of its synchronization failure and of a next distribution mode of the frequency reference and to trigger activation of the packet-based protocol between the master and the slaves;
   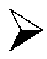 in step (ii), in the case where the distribution mode is unicast, the failed network clock may assign the role of master or slave to each of its neighbour network clocks accordingly to the local synchronization distribution topology before the failure, and may communicate to the slaves the communication address of the master via the management message of the packet-based protocol, then each of the slaves may start a unicast negotiation procedure with the master via the packet-based protocol;
- in a variant of embodiment, step (i) may comprise detecting the synchronization failure within a neighbour network clock;
   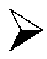 step (i) may comprise detecting the synchronization failure when a neighbour network clock does not receive a defined synchronization status message via the physical-layer-based protocol, during a predefined period, from the failed network clock;
   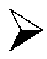 in a variant, said step (i) may comprise detecting the synchronization failure when a neighbour network clock transmits first dedicated synchronization messages to the failed network clock via the physical-layer-based protocol, but does not receive any acceptable second synchronization message from the failed network clock in response to these first dedicated synchronization messages, during a predefined period;
   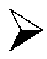 in step (ii), each potential slave may activate internally features of the packet-based protocol and may multicast a first announce message of this activated protocol to other network clocks and particularly to the potential master, and the potential master may multicast a second announce message of the activated protocol to the potential slaves, so that the neighbour network clocks (of the failed network clock) be informed of their respective roles as either a slave or the master;
- in step (ii), the failed network clock may implement forwarding rules defining the chosen topology into forwarding table(s) it comprises, to be able to multicast announce messages and synchronization messages comprising the frequency reference recovered by the master to the slaves, via the packet-based protocol;
   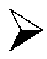 the forwarding rules may concern communication ports of the failed network clock where the physical-layer-based protocol is activated;
- it may comprise a step (iv) during which the synchronization failure of the failed network clock is repaired (or fixed) and one deactivates the activated mechanism of the packet-based protocol between neighbour network clocks, then the repaired network clock and the neighbor network clocks revert back to the mechanism of the physical-layer-based protocol;
- the physical-layer-based protocol may be chosen from a group comprising at least the ITU-T synchronous Ethernet (or SyncE), the ITU-T SONET and the ITU-T SDH;
- the protocol of the packet-based protocol may be any release of the IEEE 1588 Protocol, also called Precision Time Protocol (or PTP).

The invention also provides a computer program product comprising a set of instructions arranged, when it is executed by processing means, for performing a method such as the one above introduced to allow distribution of a frequency reference from a frequency source to network clocks, comprising a synchronization card for recovering network synchronization, an interface card for recovering data traffic and a control module for storing a chosen synchronization distribution topology, and belonging to a mobile network having a physical-layer-based protocol (as primary method) for distributing the frequency reference to the network clocks according to this chosen synchronization distribution topology, and a packet-based protocol (as backup method) for distributing the same frequency reference to the network clocks respecting the chosen synchronization distribution topology.

### Brief description of the figures

Other features and advantages of the invention will become apparent on examining the detailed specifications hereafter and the appended drawings, wherein:

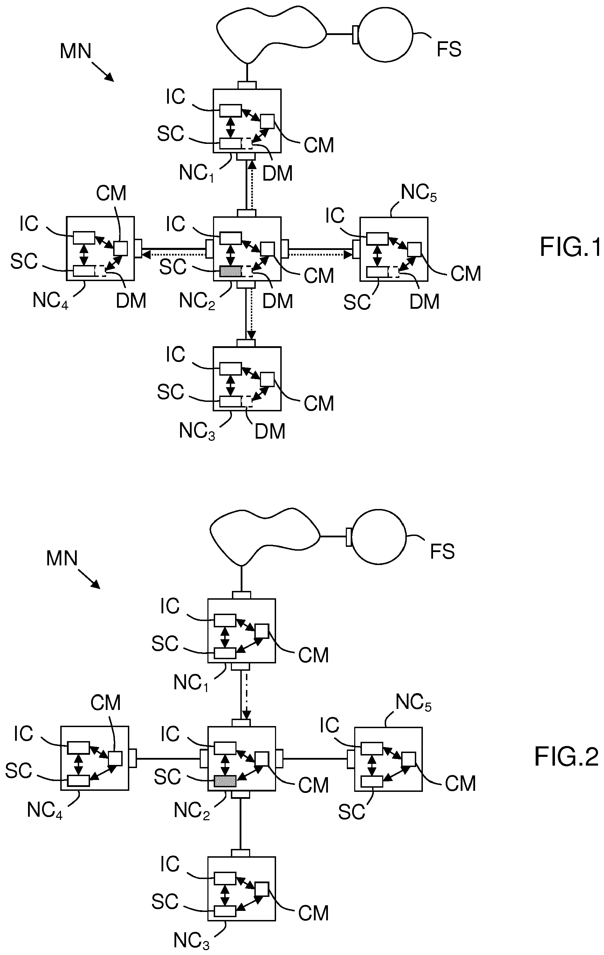

- figure 1 schematically and functionally illustrates a mobile network comprising a frequency source serving a synchronization distribution topology comprising a chain of five network clocks, in the case where the second intermediate network clock has detected a synchronization failure in its synchronization card and informs its neighbour network clocks of the situation to trigger a PTP activation therebetween,
- figure 2 schematically illustrates the mobile network of figure 1, in the case where the neighbour network clocks of the second intermediate network clock detect on their own side that there is a synchronization failure in the synchronization card of the second intermediate network clock, when they observe that they do not receive any SyncE/SDH/SONET synchronous status message from it,

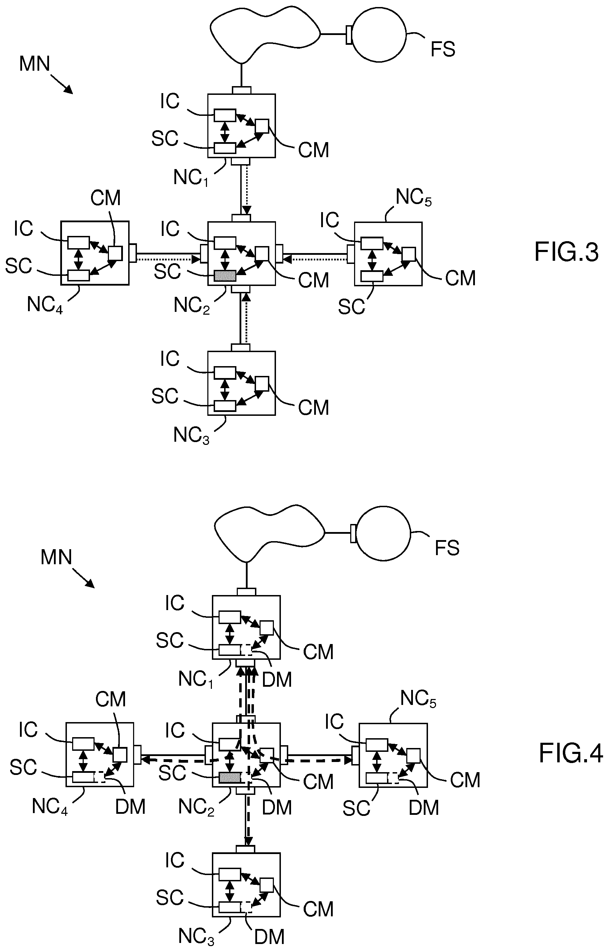

- figure 3 schematically illustrates the mobile network of figure 1, in the case where the neighbour network clocks of the second intermediate network clock detect on their own side that there is a synchronization failure in the synchronization card of the second intermediate network clock, when they observe that they do not receive any SyncE message from it in response to the SyncE messages they have transmitted to it,
- figure 4 schematically illustrates the mobile network of figure 1 during PTP message exchanges between the slaves and the master via the packet-based protocol to activate PTP therebetween, and

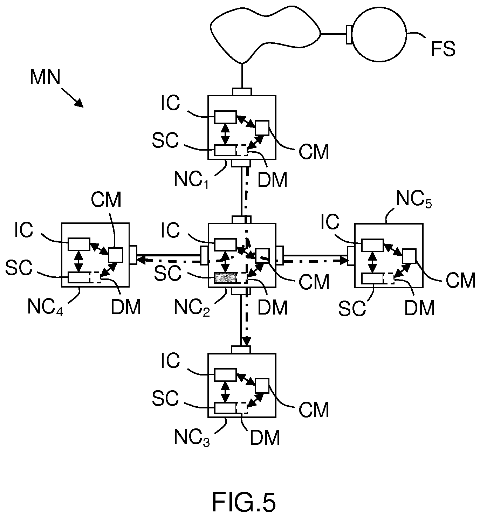

- figure 5 schematically illustrates the mobile network of figure 1 during multicast of PTP messages, comprising the recovered frequency reference, from the master to the slaves, through the second intermediate network clock.

### Detailed description of the preferred embodiment

The appended drawings may serve not only to complete the invention, but also to contribute to its understanding, if need be.

The invention aims, notably, at offering a method intended for allowing a frequency reference, provided by a frequency source FS, to be distributed to network clocks NCᵢ belonging to downstream network segment(s) of a mobile network MN, next to an intermediate network clock NC₂ having a synchronization failure on its synchronization card SC.

An example of mobile network MN is illustrated in figure 1. In this example, the mobile network MN comprises five network clocks NCᵢ (i = 1 to 5) each having a local clock (master/slave capable), and interconnected therebetween to form a kind of chain, and a frequency source FS providing a frequency reference intended for synchronizing the network clocks NCᵢ therebetween.

The frequency source FS may be a Primary Reference Clock (i.e. ITU-T G.811 a.k.a. PRC/PRS), for instance.

The mobile network MN implements a physical-layer-based protocol as the primary method for distributing the frequency reference from the frequency source FS to the network clocks NCᵢ according to a chosen (distribution) topology, and a packet-based protocol as the backup method for distributing the same frequency reference to the neighbour network clocks NCᵢ of the failed network clock NC₂, following the same chosen (distribution) topology.

In the following description it will be considered, as an example, that the physical-layer-based protocol is the ITU-T Synchronous Ethernet (or SyncE), and the packet-based protocol is any release of the Precision Time Protocol (or PTP, for instance PTPV2 (IEEE 1588V2)). But the invention is not limited to these types of physical-layer-based protocol and packet-based protocol. Indeed, the physical-layer-based protocol may also be the ITU-T SONET or the ITU-T SDH, for instance, and the packet-based protocol may also be any release of the IETF Network Time Protocol (or NTP), for instance.

So, here, the network clocks NCᵢ are assumed to be at least PTP master/slave capable and SyncE (or synchronous Ethernet) capable. If this is not the case, a simple mechanism is required for discovering SyncE network clocks (or nodes) supporting the PTP features. Moreover, the chosen topology mentioned above is defined amongst SyncE ports that are activated in the different network clocks NCᵢ accordingly to SyncE algorithms (e.g. G.781 frequency source selection algorithm). Each network clock NCᵢ comprises a control module CM in which it may store the chosen (distribution synchronization) topology, in order to have it at its disposal at any time, and notably when a synchronization failure has been detected.

Moreover, in the following description it will be considered, as an example, that each network clock NCᵢ comprises a radio base station (or BTS). But the invention is not limited to this type of network clock. Indeed, it concerns any type of network node comprising a local clock, and notably switches or routers comprising a synchronization card, for instance.

Adjacent network clocks NCᵢ are supposed to be connected together by at least a physical link, either wired or wireless.

It is recalled that a network clock NCᵢ is a network node having a local clock and performing clock recovery and clock distribution functions. To this effect each network clock NCᵢ comprises a synchronization card SC, intended for recovering network synchronization (and more precisely the frequency reference provided by the frequency source FS), and at least one interface card IC, intended for recovering and transmitting data traffic via at least two communication ports of the interface card(s) IC.

In a non-limiting example, the synchronization card SC comprises an Ethernet Equipment Clock (or EEC - specified by the ITU-T G.8262/Y.1362) to recover the frequency reference, and each interface card IC is an Ethernet interface card physically separated from the synchronization card SC, comprising an oscillator (specified by the IEEE 802.3) and used to recover and to transmit data traffic.

As mentioned above, the invention proposes notably a method intended for distributing a frequency reference of the frequency source FS to the network clocks NCᵢ in the case where a synchronization failure occurs in the physical synchronization chain of the mobile network MN (i.e. a hardware failure on the synchronization card SC of at least one of its network clocks NCᵢ).

This method comprises at least three steps (i), (ii) and (iii).

During the first step (i), one detects locally a synchronization failure in a synchronization card SC of a failed network clock NCᵢ connected to neighbour network clocks NC_{i'}.

Here, the failed network clock NCᵢ may be considered as transparent to the PTP protocol.

In the following description, and as illustrated in figures 1 to 5, it will be considered, as an example, that the failed network clock NCᵢ is the second one NC₂, which is connected to four neighbour network clocks NC_{i'} (with i' = 1, 3, 4 or 5). The first neighbour network clock NC₁ is considered as located upstream to the failed network clock NC₂ with regards to the distribution direction of the frequency reference, while the third NC₃ to fifth NC₅ neighbour network clocks are considered as located downstream to the failed network clock NC₂ with regards to the distribution direction of the frequency reference.

The detection of the synchronization failure on a failed network clock NCᵢ can be performed in at least two different manners.

In a first manner, illustrated in figure 1, the synchronization failure detection can be performed locally within and by the failed network clock NCᵢ.

To this effect, and as illustrated in figures 1 to 5 in hashed line, each network clock NCᵢ may comprise a detection module DM arranged for detecting an internal failure on its synchronization card SC. For instance, the detection module DM may comprise a temperature sensor intended for controlling if an internal OCXO (Oven Controlled X-tal Oscillator) behaves correctly according to a temperature profile.

In a second manner, illustrated in figures 2 and 3, the synchronization failure detection can be performed by neighbour network clocks NC_{i'}. So, in this case the network clocks NCᵢ do not need to comprise a detection module DM (that is the reason why the latter is sketched in hashed lines in figures 1, 4 and 5).

To this effect, and as illustrated in figure 2, a neighbour network clock NC_{i'} may detect the synchronization failure when it does not receive a chosen synchronization message (disparition of one way arrows in dotted line in comparison to figure 1) related to the physical-layer-based protocol, during a predefined period, from the failed network clock NC₂.

The chosen synchronization messages may be Synchronization Status Messages (or SSMs) that network clocks NC_{i'} are used to exchange therebetween via the physical-layer-based protocol (here SyncE).

It is recalled that, in the normal working situation (i.e. without synchronization failure), each network clock NCᵢ provides its downstream neighbour network clocks NC_{i'} with a synchronization signal representing the frequency reference (one way arrow in hashed-dotted line in figure 2) and that is traceable back to the frequency source FS). Within this situation and as defined within the ITU-T G.781, the first network clock NC₁ periodically transmits SSMs with a Quality Level (or QL) value equal to QL_PRC (0x02) to the second network clock NC₂, while in the opposite direction, the second network clock NC₂ periodically transmits SSMs with a Quality Level (or QL) value equal to QL_DNU (0x07) to the first network clock NC₁. So, when the first network clock NC₁ does not receive any SSM from the second network clock NC₂ during an observation period T, it can deduce that there is an issue in the second network clock NC₂. Similarly, network clocks NC₃ to NC₅ should periodically receive SSMs from the second network clock NC₂. So, when one of the network clocks NC₃ to NC₅ does not receive any SSM from the second network clock NC₂ during an observation period T, it can deduce that there is an issue in the second network clock NC₂.

In a variant illustrated in figure 3, a neighbour network clock NC_{i'} may detect the synchronization failure when it transmits first dedicated synchronization messages (one way arrows in dotted line pointing towards NC₂) to the failed network clock NC₂ via the physical-layer-based protocol, but does not receive any acceptable second synchronization message (no one way arrow in dotted line departing from NC₂) from the failed network clock NC₂ in response to its first dedicated synchronization messages, during a predefined period.

The first and second dedicated synchronization messages may also be Ethernet SSMs. This variant can particularly be applied when SyncE network clocks NCᵢ implement reduced SyncE functionalities as specified by ITU-T G.8261 Amendment 1 Annex A (i.e. no QI_DNU sent back to any master clock).

As specified by the ITU-T, the Ethernet SSMs allow for transporting optional Type Length Value (TLV) structures. The only mandatory TLV is by now the QL TLV of type 0x01. But, it is possible to introduce for the detection purpose two new additional TLV structures to be transported over the SSMs. In the preferred mode, each of them may be transported jointly with the QL TLV when applicable. Alternatively, each of them could be transported as a standalone TLV.

The first new SSM TLV (for instance called "SSM Ping TLV") can have the following definition:

| Size | |
|---|---|
| 8 bits | Type: 0x02 |
| 16 bits | Length: 0x0004 |
| 8 bits | Random Pattern |

The second new SSM TLV (for instance called "SSM Pong TLV") can have the following definition:

| Size | |
|---|---|
| 8 bits | Type: 0x03 |
| 16 bits | Length: 0x0004 |
| 8 bits | Pattern of previous received SSM Ping TLV |

Within this variant (and similarly to SSM QL exchanges), neighbour network clocks NC_{i'} are grouped into pairs. Within a given pair of neighbour network clocks NCᵢ, each neighbour network clock NC_{i'} transmits periodically a SSM Ping TLV to its peer with a random 8-bits pattern and expects to receive, within a predefined time period, a SSM Pong TLV containing the replica of the 8-bits pattern transmitted previously. Successive reception failures of such a procedure (whose number can be a configurable parameter) in the network clock NCᵢ of a given pair indicates an issue in the synchronization card SC of the peer network clock NC_{i'} within this pair.

During the second step (ii) of the method, one activates a mechanism of the packet-based protocol (here PTP) between a chosen one NC_{i"} (here NC₁) of the neighbour network clocks NC_{i'}, called master and which recovered frequency is traceable back to the frequency source FS, and other neighbour network clocks NC_{i"'} (here NC₃ to NC₅), called slaves.

So, this second step (ii) aims at locally (with regards to the group of neighbour network clocks NCᵢ) deploying the PTP protocol to work around the failed network clock NC₂, and locally patch the SyncE synchronization chain with this PTP mechanism.

In the case where the synchronization failure detection is locally performed within the failed network clock NC₂ (i.e. in the first manner), the latter (NC₂) may, as illustrated in figure 1, transmit at least one dedicated management message of the packet-based protocol (here PTP) to its neighbour network clocks NC_{i'} (here NC₁ and NC₃ to NC₅), in order to inform them of its synchronization failure and of a next distribution mode of the frequency reference and to trigger activation of this protocol (here PTP) between the master NC_{i"} (here NC₁) and the slaves (here NC₃ to NC₅). These dedicated management messages are materialized in figure 1 by one way arrows in dotted line.

In the considered example, the dedicated management message is a PTP management message (i.e. with a PTP message type equal to 0xD). It is important to note that unless a specific new SSM TLV is defined, the SSM QL TLV, being dedicated for announcing a failure within the SyncE synchronization chain cannot be used as a support for driving a SyncE-to-PTP mode switching within neighbour network clocks NC_{i"} of the failed network clock NCᵢ. However, PTP is the preferred method as SSMs processing is intimately linked to the SyncE synchronization card SC (which is in failure).

Such a PTP management message can include the following "PSLR Activate TLV" whose type values are taken to be within the experimental range [0x2004 - 0x3FFF] (as defined in IEEE Standard 1588-2008 - Table 34):

| Size | |
|---|---|
| 8 bits | Type: 0x3000 |
| 16 bits | Length: 0x0004 |
| 8 bits | Role |

where the 8-bits Role field designates at least the announced next distribution mode (i.e. unicast or multicast). It may also possibly assign role (master or slave) to a particular neighbour network clocks NC_{i"} accordingly to the local (with regards to the group of neighbour network clocks NCᵢ) synchronization distribution topology before the failure. For instance, the 8-bits Role field can have the following values:
- 0x01: master- unicast,
- 0x02: alternate master - unicast,
- 0x04: slave - unicast,
- 0x11: master - multicast,
- 0x12: alternate master - multicast,
- 0x14: slave - multicast,
- 0xFF: wildcard.

Here, the alternate master is a neighbour network clock NC_{i"} that can potentially be a master, but which is not the first master choice of the failed network clock NC₂ when the latter (NC₂) has at least two frequency sources (upstream).

For the neighbour network clock NC₁, from which the failed network clock NC₂ recovered the frequency reference using SyncE before its synchronization failure, NC₂ assigns the role of the master, while it assigns the role of slaves to the other neighbour network clocks NC₃ to NC₅.

In the case where the announced next distribution mode is unicast, the failed network clock NCᵢ (here NC₂) may transmit another (PTP) dedicated management message of the protocol to the slaves NC_{i"'} (here NC₃ to NC₅) in order to provide them at least with a communication address of the master NC_{i"} (here NC₁). Then, each of the slaves NC_{i"'} (here NC₃ to NC₅) may start a unicast negotiation procedure with the master NC_{i"} (here NC₁) via the packet-based protocol.

Such other PTP management message can include the following "PSLR Master TLV" whose type values are taken to be within the experimental range [0x2004 - 0x3FFF] (as defined in IEEE Standard 1588-2008 - Table 34):

| Size | |
|---|---|
| 8 bits | Type: 0x3010 |
| 16 bits | Length: 0x000C |
| 8 bits | Address Type |
| 64 bits | Address Value |

and/or the following "PSLR Alternate Master TLV" whose type values are taken to be within the experimental range [0x2004 - 0x3FFF] (as defined in IEEE Standard 1588-2008 - Table 34):

| Size | |
|---|---|
| 8 bits | Type: 0x3011 |
| 16 bits | Length: 0x000C |
| 8 bits | Address Type |
| 64 bits | Address Value |

where the 64-bits Address Value field designates the master or the alternate master,
and where the 8-bits Address Type field can have the following values, for instance:
- 0x01: IPv4 address,
- 0x02: IPv6 address,
- 0x03: MPLS/PW label,
- 0x04: Ethernet MAC address,
- 0x05: ATM VPI/VCI,
- 0x06: Frame Relay DLCI.

As illustrated in figure 4, in the unicast distribution mode, once the slaves NC_{i"'} discover the master NC_{i"} (via its communication address), each of them starts a unicast negotiation procedure with this master NC_{i"} (two-ways arrows in hashed lines).

In the case where the synchronization failure detection is performed by the neighbour network clocks NC_{i'} (i.e. in the second manner), each slave NC_{i'} activates internally features of the (PTP) protocol and transmits, in a multicast mode, a first announce message of this activated (PTP) protocol to all other neighbour clocks and especially to the master NC_{i"}, and the master NC_{i"} transmits, in a multicast mode, a second announce message of the activated (PTP) protocol to the slaves NC_{i"'} so that each neighbour network clock NC_{i'} be informed of which is a slave and which is the master.

In the described example, the internal activation of the PTP features is intended for starting the PSLR procedures and beginning multicasting PSLR Announce messages. For instance, these PSLR Announce messages consist of normal PTP Announce messages with a specific domain number 0x0F (this domain number allows the PSLR procedure to operate as orthogonally as possible to the ITU-T PTP Telecom frequency profile). In this case, the upstream neighbour network clock NC_{i"} (here NC₁) (with regards to the chosen SyncE synchronization distribution topology) may transmit a clockClass value corresponding to QL_PRC as it is still traceable back to the frequency source FS (e.g. clockClass = 84 (as defined in ITU-T G.8265)). Each downstream neighbour network clock NC_{i"'} (here NC₃, NC₄ or NC₅) (with regards to the chosen SyncE synchronization distribution topology) may transmit a clockClass value corresponding to QL_SEC (or QL_ST3) as it goes into holdover (e.g. clockClass = 104 (as defined in ITU-T G.8265)).

The above mentioned exchanges of clockClass values (through first and second Announce messages) allow each potential PSLR slave NC_{i"'} to discover and select the PSLR master NC_{i"} as well as the possible PSLR alternate master(s). By definition, a master is a neighbour network clock NC_{i"} that remains traceable to the frequency source FS via SyncE, while each neighbour network clock NC_{i"'} that is not anymore traceable to the frequency source FS (due to NC₂ synchronization failure) becomes a slave.

It is important to note that PSLR Announce messages use network multicast addresses assigned by the standard for the transport of PTP: IPv4 address 224.0.1.129 or Ethernet MAC address 01-1B-19-00-00-00, for instance.

It is also important to note that the failed network clock NCᵢ (here NC₂) is PTP non-aware, as no PTP protocol is activated. So, it behaves as a normal network clock which multicasts the Announce messages, as explained below.

It is also important to note that the failed network clock NCᵢ (here NC₂) has no activated PTP protocol stack. So, in the second step (ii) the failed network clock NCᵢ may implement forwarding rules defining the chosen topology into forwarding table(s) it comprises, to be able, in the third step (iii) to multicast the announce messages and synchronization messages comprising the frequency reference recovered by the master NC_{i"} to the slaves NC_{i"'}, via the packet-based protocol. These forwarding rules concern communication ports of the failed network clock NCᵢ where the physical-layer-based protocol is activated (or more specifically the ports supporting SSMs).

As mentioned above, the failed network clock NCᵢ comprises a control module CM in which it may store the chosen distribution synchronization topology. So, when its synchronization failure has been detected, it is able to replicate this stored distribution synchronization topology using the packet-based protocol. This control module CM is also in charge of managing the SyncE-to-PTP mode change at synchronization failure detection, and reversely the PTP-to-SyncE mode change once the failure has been repaired.

It is also important to note that still another PTP management message can be created to allow the failed network clock NCᵢ (here NC₂) to de-activate the PSLR procedure (i.e. the local PTP activation for patching the SyncE synchronization chain with PTP), once the failure has been repaired. Such a PTP management message can include the following "PSLR De-Activate TLV" whose type values are taken to be within the experimental range [0x2004 - 0x3FFF] (as defined in IEEE Standard 1588-2008 - Table 34):

| Size | |
|---|---|
| 8 bits | Type: 0x3001 |
| 16 bits | Length: 0x0004 |
| 8 bits | Role |

The wildcard value of the Role field can be used here to send undifferentiated message to all the neighbor network clocks NC_{i'}.

When a neighbor network clock NC_{i'} receives a PTP management message including the PSLR De-Activate TLV, it switches back to the SyncE mode.

During the third step (iii) of the method, one uses the activated packed-based protocol mechanism (here PTP) to transmit the frequency reference recovered by the master NC_{i"} (here NC₁) to the slaves NC_{i"'} (here NC₃ to NC₅), by following the chosen (SyncE) topology. This transmission (or distribution) is illustrated in figure 5 by the one way arrows in dotted-hashed line.

So, the interworking mechanism implemented in the second step (ii) is now used to switch/route the PTP messages across the failed network clock NCᵢ (here NC₂) accordingly to the chosen SyncE topology. More precisely, the master NC_{i"} (here NC₁) multicasts the frequency reference it has recovered from the frequency source FS to the failed network clock NCᵢ (here NC₂), via the packet-based protocol, and the failed network clock NCᵢ (here NC₂) multicasts the received recovered frequency reference to all its interfaces where SyncE is activated (or alternatively on all its interfaces where the feature PSLR is configured), except to the interface where it receives the frequency reference. The later procedure is also performed via the packet-based protocol.

The method according to the invention may further comprise a step (iv) during which the synchronization failure of the failed network clock NC₂ is repaired (or fixed). In this case, one (the control module CM of the repaired network clock NC₂) deactivates the activated mechanism of the packet-based protocol between its neighbour network clocks, then the repaired network clock NC₂ and its neighbor network clocks revert back to the mechanism of the physical-layer-based protocol.

The invention allows for backing up SyncE/SDH/SONET synchronization with PTP in a scalable, cost-effective and efficient manner. Moreover, the invention is more cost effective and more scalable than the best-known solutions as it only deploys PTP within a limited network area (e.g. amongst neighbour network clocks of the failed network clock NC₂). It is also more efficient (in terms of synchronization accuracy) than the best-known solutions, as PTP messages only cross (transparently) one unique network clock (or node), and therefore induces a smaller network PDV.

The invention is not limited to the embodiments of method described above, only as examples, but it encompasses all alternative embodiments which may be considered by one skilled in the art within the scope of the claims hereafter.

## Claims

1. Method for distributing a frequency reference from a frequency source (FS) to network clocks (NCi), comprising a synchronization card (SC) for recovering network synchronization and an interface card (IC) for recovering data traffic, and belonging to a mobile network (MN) having a physical-layer-based protocol for distributing said frequency reference to said network clocks (NCi) according to a chosen topology, and a packet-based protocol for distributing said frequency reference to the network clocks (NCi) respecting this chosen topology, **characterized in that** said method comprises a step (i) of detecting a synchronization failure in a synchronization card (SC) of a failed network clock (NCi) connected to neighbour network clocks (NCi'), a step (ii) of activating a mechanism of said packet-based protocol between a chosen one amongst neighbour network clocks, called the master and with a recovered frequency traceable back to said frequency source (FS), and other neighbour network clocks (NCi"'), called slaves, and a step (iii) of using said activated packet-based protocol mechanism to transmit said frequency reference recovered by said master (NCi") to said slaves (NCi"'), by following said chosen topology.

2. Method according to claim 1, wherein step (i) comprises detecting locally said synchronization failure within said failed network clock (NCi), and in step (ii) said failed network clock (NCi) transmits at least one dedicated management message of said packet-based protocol to said neighbour network clocks (NCi'), in order to inform them of said synchronization failure and of a next distribution mode of said frequency reference and to trigger activation of said packet-based protocol between said master (NCi") and said slaves (NCi"').

3. Method according to claim 2, wherein in step (ii), in the case where said distribution mode is unicast, said failed network clock (NCi) assigns the role of master or slave to each of its neighbour network clocks (NCi') accordingly to said chosen synchronization distribution topology before the failure, and then communicates to said slaves (NCi"') a communication address of said master (NCi") via the management message of said packet-based protocol said master (NCi"), then each of said slaves (NCi"') starts a unicast negociation procedure with said master (NCi") via said packet-based protocol.

4. Method according to claim 1, wherein step (i) comprises detecting said synchronization failure within said neighbour network clocks (NCi').

5. Method according to claim 4, wherein step (i) comprises detecting said synchronization failure when a neighbour network clock (NCi') does not receive a defined synchronization status message via said physical-layer-based protocol, during a predefined period, from said failed network clock (NCi).

6. Method according to claim 4, wherein step (i) comprises detecting said synchronization failure when a neighbour network clock (NCi') transmits first dedicated synchronization messages to said failed network clock (NCi) via said physical-layer-based protocol, but does not receive any acceptable second synchronization message from said failed network clock (NCi) in response to said first dedicated synchronization messages, during a predefined period.

7. Method according to one of claims 4 to 6, wherein in step (ii) each potential slave (NCi"') activates internally features of said packet-based protocol and multicasts a first announce message of said activated packet-based protocol to other network clocks and particularly to a potential master (NCi"), and said potential master (NCi") multicasts a second announce message of said activated packet-based protocol to said potential slaves (NCi"'), so that the neighbour network clocks (NCi') be informed of their respective roles as either a slave or the master.

8. Method according to one of claims 1 to 7, wherein in step (ii) said failed network clock (NCi) implements forwarding rules defining said chosen topology into forwarding table(s) it comprises, to be able to multicast announce messages and synchronization messages, comprising said frequency reference recovered by said master (NCi"), to said slaves (NCi"'), via said packet-based protocol.

9. Method according to claim 8, wherein said forwarding rules concern communication ports of said failed network clock (NCi) where said physical-layer-based protocol is activated.

10. Method according to one of claims 1 to 9, wherein it comprises a step (iv) during which said synchronization failure of the failed network clock is repaired and one deactivates the activated mechanism of said packet-based protocol between said neighbour network clocks, then the repaired network clock and its neighbor network clocks revert back to said physical-layer-based protocol.

11. Method according to one of claims 1 to 10, wherein said physical-layer-based protocol is chosen from a group comprising at least the ITU-T Synchronous Ethernet, the ITU-T SONET and the ITU-T SDH.

12. Method according to one of claims 1 to 11, wherein said protocol of said packet-based protocol is a release of the IEEE 1588 Protocol, also called ITU-T Precision Time Protocol.

13. Computer program product comprising a set of instructions arranged, when it is executed by processing means, for performing the method according to one of the preceding claims.

## Patentansprüche

1. Verfahren zum Verteilen einer Frequenzreferenz von einer Frequenzquelle (FS) auf Netzwerkuhren (NCi), umfassend eine Synchronisationskarte (SC) für das Zurückgewinnen der Netzwerksynchronisation und eine Schnittstellenkarte (IC) zum Zurückgewinnen des Datenverkehrs, die zu einem mobilen Netzwerk (MN) gehört, das ein auf einer physikalischen Schicht basierendes Protokoll aufweist zum Verteilen besagter Frequenzreferenz auf besagte Netzwerkuhren (NCi) gemäß einer ausgewählten Topologie, und ein paketbasiertes Protokoll für das Verteilen besagter Frequenzreferenz auf die Netzwerkuhren (NCi), die sich auf diese ausgewählte Topologie beziehen, **dadurch gekennzeichnet, dass** besagtes Verfahren einen Schritt (i) des Erkennens eines Synchronisationsfehlers in einer Synchronisationskarte (SC) einer fehlerhaften Netzwerkuhr (NCi) umfasst, die mit benachbarten Netzwerkuhren (NCi') verbunden ist, einen Schritt (ii) des Aktivierens eines Mechanismus besagten paketbasierten Protokolls zwischen einer ausgewählten aus benachbarten Netzwerkuhren, Master genannt, und mit einer zurückgewonnenen Frequenz, die zurückverfolgbar ist auf besagte Frequenzquelle (FS), und anderen benachbarten Netzwerkuhren (NCi"'), Slaves genannt, und einen Schritt (iii) des Benutzens besagten aktivierten paketbasierten Protokollmechanismus zum Übertragen besagter Frequenzreferenz, die von besagtem Master (NCi") zurückgewonnen wurde, auf besagte Slaves (NCi"') durch Befolgen besagter ausgewählten Topologie.

2. Verfahren nach Anspruch 1, wobei Schritt (i) umfasst das lokale Erkennen besagten Synchronisationsfehlers innerhalb besagter fehlerhaften Netzwerkuhr (NCi), und in Schritt (ii) überträgt besagte fehlerhafte Netzwerkuhr (NCi) mindestens eine dedizierte Verwaltungsnachricht von besagtem paketbasierten Protokoll auf besagte benachbarte Netzwerkuhren (NCi'), um sie zu informieren über besagten Synchronisationsfehler und über einen nächsten Verteilungsmodus besagter Frequenzreferenz und zum Auslösen der Aktivierung besagten paketbasierten Protokolls zwischen besagtem Master (NCi") und besagten Slaves (NCi"').

3. Verfahren nach Anspruch 2, wobei in Schritt (ii) im Falle, dass besagter Verteilungsmodus Unicast ist, besagte fehlerhafte Netzwerkuhr (NCi) jeder ihrer benachbarten Netzwerkuhren (NCi') die Rolle von Master und Slave zuweist gemäß besagter ausgewählten Synchronisationsverteilungstopologie vor dem Fehler, und dann besagten Slaves (NCi"') eine Kommunikationsadresse besagten Masters (NCi") über die Verwaltungsnachricht besagten paketbasierten Protokolls besagten Masters (NCi") zuweist und dann jeder besagter Slaves (NCi"') ein Unicast-Verhandlungsverfahren mit besagtem Master (NCi") über besagtes paketbasierte Protokoll startet.

4. Verfahren nach Anspruch 1, wobei Schritt (i) umfasst
das Erkennen besagten Synchronisationsfehlers innerhalb besagter benachbarten Netzwerkuhren (NCi').

5. Verfahren nach Anspruch 4, wobei Schritt (i) umfasst
das Erkennen besagten Synchronisationsfehlers, wenn eine benachbarte Netzwerkuhr (NCi') keine definierte Synchronisationsstatusnachricht über besagtes auf einer physikalischen Schicht basierenden Protokolls während eines vordefinierten Zeitraums von besagter fehlerhaften Netzwerkuhr (NCi) empfängt.

6. Verfahren nach Anspruch 4, wobei Schritt (i) umfasst
das Erkennen besagten Synchronisationsfehlers, wenn eine benachbarte Netzwerkuhr (NCi') erste dedizierte Synchronisationsnachrichten auf besagte fehlerhafte Netzwerkuhr (NCi) überträgt über besagtes auf einer physikalischen Schicht basierenden Protokolls, aber keine akzeptable zweite Synchronisationsnachricht von besagter fehlerhaften Netzwerkuhr (NCi) als Antwort auf besagte ersten dedizierten Synchronisationsnachrichten während eines vordefinierten Zeitraums empfängt.

7. Verfahren nach einem der Ansprüche 4 bis 6, wobei in Schritt (ii) jeder potentielle Slave (NCi"') intern Funktionen besagten paketbasierten Protokolls aktiviert und ein Multicasting einer ersten Ankündigungsnachricht besagten aktivierten paketbasierten Protokolls auf andere Netzwerkuhren durchführt und insbesondere auf einen potentiellen Master (NCi"), und wobei besagter potentielle Master (NCi") ein Multicasting einer zweiten Ankündigungsnachricht besagten aktivierten paketbasierten Protokolls auf besagte potentielle Slaves (NCi"') durchführt, sodass die benachbarten Netzwerkuhren (NCi') informiert werden über ihre entsprechenden Rollen entweder als Slave oder Master.

8. Verfahren nach einem der Ansprüche 1 bis 7, wobei in Schritt (ii) besagte fehlerhafte Netzwerkuhr (NCi) Weiterleitungsregeln implementiert, welche besagte ausgewählte Topologie definieren, in einer Weiterleittabelle(n), die sie umfasst, um in der Lage zu sein für das Multicasting von Ankündigungsnachrichten und Synchronisationsnachrichten, umfassend besagte Frequenzreferenz, die zurückerhalten wurde von besagtem Master (NCi"), auf besagte Slaves (NCi"'), über besagtes paketbasierte Protokoll.

9. Verfahren nach Anspruch 8, wobei besagte Weiterleitungsregeln Kommunikationsports besagter fehlerhafter Netzwerkuhr (NCi) sind, wobei besagtes auf einer physikalischen Schicht basierendes Protokoll aktiviert wird.

10. Verfahren nach einem beliebigen der Ansprüche 1 bis 9, wobei es umfasst einen Schritt (iv), während dem besagter Synchronisationsfehler der fehlerhaften Netzwerkuhr repariert wird und der aktivierte Mechanismus besagten paketbasierten Protokolls zwischen besagten benachbarten Netzwerkuhren deaktiviert wird; danach schalten die reparierte Netzwerkuhr und ihre benachbarten Netzwerkuhren zurück auf besagtes auf einer physikalischen Schicht basierendes Protokoll.

11. Verfahren nach einem der Ansprüche 1 bis 10, wobei besagtes auf einer physikalischen Schicht beruhendes Protokoll ausgewählt wird aus einer Gruppe, die mindestens umfasst das synchrone ITU-T Ethernet, ITU-T SONET und ITU-T SDH.

12. Verfahren nach einem der Ansprüche 1 bis 11, wobei besagtes Protokoll besagten paketbasierten Protokolls eine Freigabe des Protokolls IEEE 1588 ist, auch genannt
ITU-T Precision Time Protocol.

13. Computerprogramm-Produkt, umfassend einen Satz von Befehlen, die angeordnet sind, wenn es auf einem Verarbeitungsmittel ausgeführt wird, zum Durchführen des Verfahrens nach einem der vorhergehenden Ansprüche.

## Revendications

1. Procédé de distribution d'une référence de fréquence provenant d'une source de fréquence (FS) à des horloges de réseau (NCi), comprenant une carte de synchronisation (SC) destinée à récupérer une synchronisation de réseau et une carte d'interface (IC) destinée à récupérer un trafic de données, et appartenant à un réseau mobile (MN) disposant d'un protocole de couche physique pour distribuer ladite référence de fréquence auxdites horloges de réseau (NCi) selon une topologie choisie, et d'un protocole en mode paquet pour distribuer ladite référence de fréquence aux horloges de réseau (NCi) conformément à cette topologie choisie, **caractérisé en ce que** ledit procédé comprend une étape (i) de détection d'une panne de synchronisation dans une carte de synchronisation (SC) d'une horloge de réseau défaillante (NCi) connectée à des horloges de réseau voisines (NCi'), une étape (ii) d'activation d'un mécanisme dudit protocole en mode paquet entre une horloge choisie parmi les horloges de réseau voisines, appelée horloge maître et avec une fréquence récupérée traçable jusqu'à ladite source de fréquence (FS), et d'autres horloges de réseau voisines (NCi"'), appelées horloges esclaves, et une étape (iii) d'utilisation dudit mécanisme de protocole en mode paquet activé pour transmettre ladite référence de fréquence récupérée par ladite horloge maître (NCi") auxdites horloges esclaves (NCi"'), en suivant ladite topologie choisie.

2. Procédé selon la revendication 1, dans lequel l'étape (i) comprend la détection locale de ladite panne de synchronisation dans ladite horloge de réseau défaillante (NCi), et à l'étape (ii) ladite horloge de réseau défaillante (NCi) transmet au moins un message de gestion spécifique dudit protocole en mode paquet auxdites horloges de réseau voisines (NCi'), afin de les informer de ladite panne de synchronisation et d'un nouveau mode de distribution de ladite référence de fréquence et pour déclencher l'activation dudit protocole en mode paquet entre ladite horloge maître (NCi") et lesdites horloges esclaves (NCi"').

3. Procédé selon la revendication 2, dans lequel à l'étape (ii), dans le cas où ledit mode de distribution est l'unidiffusion, ladite horloge de réseau défaillante (NCi) attribue le rôle d'horloge maître ou d'horloge esclave à chacune de ses horloges de réseau voisines (NCi') conformément à ladite topologie de distribution de synchronisation choisie avant la panne, puis communique auxdites horloges esclaves (NCi"') une adresse de communication de ladite horloge maître (NCi") via le message de gestion dudit protocole en mode paquet de ladite horloge maître (NCi"), puis chacune desdites horloges esclaves (NCi"') démarre une procédure de négociation d'unidiffusion avec ladite horloge maître (NCi") via ledit protocole en mode paquet.

4. Procédé selon la revendication 1, dans lequel l'étape (i) comprend la détection de ladite panne de synchronisation dans lesdites horloges de réseau voisines (NCi').

5. Procédé selon la revendication 4, dans lequel l'étape (i) comprend la détection de ladite panne de synchronisation lorsqu'une horloge de réseau voisine (NCi') ne reçoit pas un message d'état de synchronisation défini via ledit protocole de couche physique, au cours d'une période prédéfinie, en provenance de ladite horloge de réseau défaillante (NCi).

6. Procédé selon la revendication 4, dans lequel l'étape (i) comprend la détection de ladite panne de synchronisation lorsqu'une horloge de réseau voisine (NCi') transmet des premiers messages de synchronisation spécifiques à ladite horloge de réseau défaillante (NCi) via ledit protocole de couche physique, mais ne reçoit aucun deuxième message de synchronisation acceptable en provenance de ladite horloge de réseau défaillante (NCi) en réponse auxdits premiers messages de synchronisation spécifiques, au cours d'une période prédéfinie.

7. Procédé selon l'une des revendications 4 à 6, dans lequel à l'étape (ii) chaque horloge esclave potentielle (NCi"') active en interne des fonctions dudit protocole en mode paquet et effectue une diffusion groupée d'un premier message d'annonce dudit protocole en mode paquet activé vers les autres horloges de réseau et en particulier vers une horloge maître potentielle (NCi"), et ladite horloge maître potentielle (NCi") effectue une diffusion groupée d'un deuxième message d'annonce dudit protocole en mode paquet activé auxdites horloges esclaves potentielles (NCi"'), de sorte que les horloges de réseau voisines (NCi') soient informées de leurs rôles respectifs en tant qu'horloge esclave ou qu'horloge maître.

8. Procédé selon l'une des revendications 1 à 7, dans lequel à l'étape (ii) ladite horloge de réseau défaillante (NCi) met en oeuvre des règles de transmission définissant ladite topologie choisie dans des table(s) de transmission qu'elle contient, afin de pouvoir effectuer des diffusions groupées de messages d'annonce et de messages de synchronisation, comprenant ladite référence de fréquence récupérée par ladite horloge maître (NCi"), vers lesdites horloges esclaves (NCi"'), via ledit protocole en mode paquet.

9. Procédé selon la revendication 8, dans lequel lesdites règles de transmission concernent des ports de communication de ladite horloge de réseau défaillante (NCi) où ledit protocole de couche physique est activé.

10. Procédé selon l'une des revendications 1 à 9, comprenant une étape (iv) au cours de laquelle ladite panne de synchronisation de l'horloge de réseau défaillante est réparée et l'on désactive le mécanisme dudit protocole en mode paquet activé entre lesdites horloges de réseau voisines, puis l'horloge de réseau réparée et ses horloges de réseau voisines reviennent audit protocole de couche physique.

11. Procédé selon l'une des revendications 1 à 10, dans lequel ledit protocole de couche physique est choisi dans un groupe comprenant au moins l'Ethernet synchrone UIT-T, le SONET UIT-T et le SDH UIT-T.

12. Procédé selon l'une des revendications 1 à 11, dans lequel ledit protocole dudit protocole en mode paquet est une version du protocole IEEE 1588, appelé également protocole de précision temporelle UIT-T.

13. Produit-programme informatique comprenant un ensemble d'instructions agencées destiné, lorsqu'il est exécuté par des moyens de traitement, à mettre en oeuvre le procédé selon l'une des revendications précédentes.
